# EUROPEAN PATENT APPLICATION

(11) **EP 4 564 375 A1**
(43) Date of publication of application: **04.06.2025**
(21) Application number: 24832340.4
(22) Date of filing: 17.06.2024
(51) Int. Cl.: H01B 7/29, H01B 7/02, H01R 13/527, H01M 50/298

(54) **WIRE FOR ELECTRICAL CONNECTION, AND BATTERY MODULE FOR FORMING ELECTRICAL CONNECTION USING SAME**

(30) Priority: 30.06.2023 KR 20230085041
(71) Applicant: LG Energy Solution, Ltd., Seoul 07335 (KR)
(72) Inventor: HWANG, Sung Tack, Daejeon 34122 (KR)
(74) Representative: Plasseraud IP
(86) International application number: PCT/KR2024/008278
(87) International publication number: WO 2025/005560

(57) **Abstract**

Disclosed is a wire for electrical connection, the wire including a metal conductor located at the inner center thereof, a plurality of gas discharge members added to an outer surface of the metal conductor, the gas discharge members being disposed in a longitudinal direction of the metal conductor, an insulative tube configured to cover the outer surface of the metal conductor to which the plurality of gas discharge members is added, and a highly refractory covering layer configured to cover the insulative tube, whereby it is possible to prevent liquid and gas generated in the wire from being discharged in an unspecified direction in the event of fire.

## Description

### [Technical Field]

This application claims the benefit of priority to Korean Patent Application No. 2023-0085041 filed on June 30, 2023, the disclosure of which is incorporated herein by reference in its entirety.

The present invention relates to a wire for electrical connection and a battery module in which electrical connection is formed using the same. More particularly, the present invention relates to a wire for electrical connection capable of guiding, in a specific direction, liquid and gas generated as a cover of the wire in the state of electrical connection is deformed by flames and a battery module in which electrical connection is formed using the same.

### [Background Art]

There is growing demand for secondary batteries capable of solving the problem of air pollution caused by the use of fossil fuels and storing electrical energy produced from alternative energy sources. For example, a lithium secondary battery, which has high energy density per weight, is used as an energy source not only for mobile devices, such as mobile phones, tablet computers, Bluetooth earphones, and electronic cigarettes, but also for medium- and large-sized devices, such as electric bicycles, electric kickboards, and electric vehicles.

As the types of devices that use lithium secondary batteries as an energy source expands, application of lithium secondary batteries is also expanding to devices that require high capacity and high output.

In line with this trend, a battery module in which a plurality of battery cells is electrically connected to each other and a battery pack in which a plurality of battery modules is connected to each other in series and/or in parallel are being manufactured and used.

A busbar may be used as a means configured to electrically connect a plurality of battery cells to each other, and a wire may be used in the case in which the busbar, which is hard to deform, is not applicable.

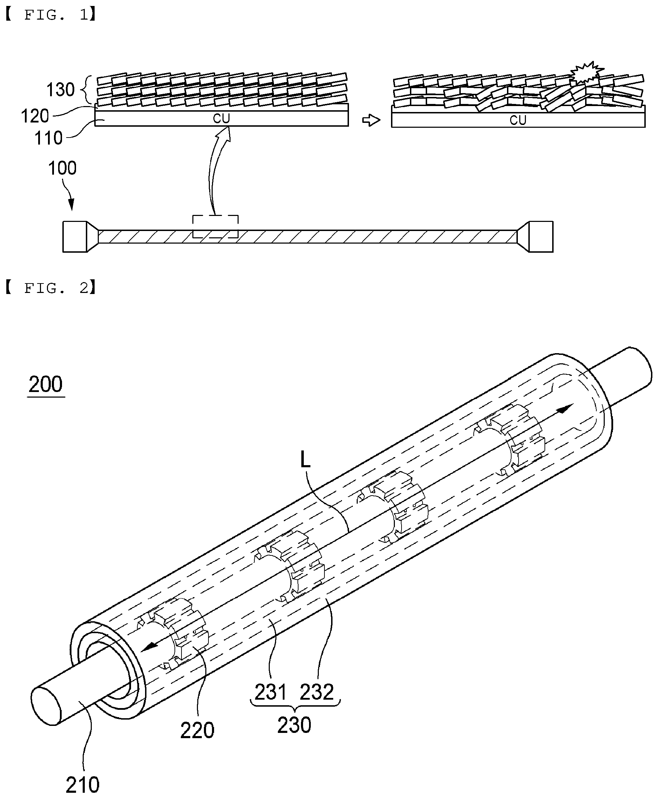

FIG. 1 is a front view and a partial enlarged view of a conventional general wire.

Referring to FIG. 1, the wire 100 may have a metal conductor 110 made of a copper material located at the innermost side thereof, an insulating layer 120 may cover an outer surface of the metal conductor 110, and the insulating layer 120 may be made of an insulative tube. An outer surface of the insulating layer 120 is covered by a heat resistant layer 130 that is hardly deformed at high temperatures. The heat resistant layer 130 may be configured as a strip so as to be wound around the insulating layer 120.

When exothermic reaction occurs in a battery cell in a battery module or a battery pack, heat may be conducted to battery cells adjacent thereto. At this time, fire may occur, and the fire in the battery cell may lead to fire in the battery module or the battery pack.

When the temperature of a wire that electrically connects the battery cells to each other or electrically connects internal structures of the battery module or the battery pack to each other increases, the insulative tubes may be ceramized, whereby cracks may occur. Gas generated at this time may tear off a part of the heat resistant layer 130 wound in the form of a strip.

This may expose the metal conductor 110 located at the inner center of the wire 100 to the outside, whereby the metal conductor may come into contact with a conductive component located in the vicinity thereof, and therefore short circuit may occur.

In addition, a phenomenon in which the heat resistant layer tears at an unspecified position occurs, whereby it is difficult to predict where the heat resistant layer will tear during the design of the battery module or the battery pack, making it difficult to prepare for short circuit.

Patent document 1 relates to a special cable for aviation equipment including several sets of cable core units, wherein the outside of the cable core units is covered by an outer cover, and a flame retardant filling layer is installed between the outer cover and the cable core units. An outer shielding layer is installed on the outside of the outer cover, a heat-insulating flame-retardant layer is installed on the outside of the outer shielding layer, and a heat conduction layer and a high temperature resistant layer are sequentially formed on the outside of the heat-insulating flame-retardant layer. A plurality of ventilation holes is installed in the heat conduction layer at equiangular intervals, and a ventilation assembly is installed so as to be connected to the ventilation holes. Low-temperature inert gas may be allowed to pass through the ventilation holes using the ventilation assembly to cool and insulate the high temperature resistant layer outside the heat conduction layer, and at the same time heat may be dissipated from the inside.

In Patent document 1, the ventilation holes are provided in the heat conduction layer and the ventilation assembly is mounted in communication with the ventilation holes to cool and insulate the high temperature resistant layer, thereby ensuring the safety of the cable in a high temperature environment and in the event of fire.

Patent document 2 relates to a fire-preventing flame-retardant type cable, which is configured such that a fire-preventing flame-retardant layer, a covering layer, and a sheathing layer sequentially cover the outer surface of a central fire-resistant cable core. The fire-resistant cable core includes a plurality of conductors and a mica band fire-preventing layer and an insulating film configured to cover the same. A plurality of gas passages is installed in the sheathing layer, wherein the heat dissipation and cooling functions of the cable are realized through the flow of gas in the gas passages.

In Patent document 2, gas is allowed to flow through the gas passages provided in the sheathing layer, which is the outermost layer of the cable, to cool the cable, thereby securing safety of the cable.

However, there is a need for technology capable of preventing the insulation layer and temperature resistant layer added to the outer surface of the wire from cracking and exposing the metal conductors inside while preventing the metal conductors from contacting parts located in the vicinity thereof even if the metal conductors are exposed.

### (Prior Art Documents)

(Patent Document 1) Chinese Patent Application Publication No. 115312244 (2022.11.08)
(Patent Document 2) Chinese Registered Utility Model Publication No. 210296002 (2020.04.10)

### [Disclosure]

### [Technical Problem]

The present invention has been made in view of the above problems, and it is an object of the present invention to provide a wire for electrical connection capable of preventing a sheath of the wire from being peeled off at an unspecified part by inducing gas generated in the wire so as to be discharged to both ends of the wire in the event of fire and a battery module in which electrical connection is formed using the same.

### [Technical Solution]

A wire for electrical connection according to the present invention to accomplish the above object includes a metal conductor located at the inner center thereof, a plurality of gas discharge members added to an outer surface of the metal conductor, the gas discharge members being disposed in a longitudinal direction of the metal conductor, an insulative tube configured to cover the outer surface of the metal conductor to which the plurality of gas discharge members are added, and a highly refractory covering layer configured to cover the insulative tube.

Each of the plurality of gas discharge members may be in the form of a ring that is fitted around the outer surface of the metal conductor.

Each of the plurality of gas discharge members may comprise a flow groove configured to allow gas and liquid to be discharged therethrough, wherein the flow groove extends parallel to the longitudinal direction of the metal conductor.

The flow groove formed in each of the plurality of gas discharge members may be disposed so as to be aligned with the flow groove formed in a gas discharge member adjacent thereto in the longitudinal direction.

Liquid and gas generated as the insulative tube is deformed by flames or high temperatures may move to both ends of the metal conductor in the longitudinal direction through the flow grooves.

The wire may further include an insulating layer configured to cover the outer surface of the metal conductor, wherein the plurality of gas discharge members may be on an outer surface of the insulating layer.

Each of the plurality of gas discharge members may include a flow groove configured to allow gas and liquid to be discharged therethrough, the flow groove being formed parallel to the longitudinal direction of the metal conductor, a plurality of through-holes may be formed in the flow groove of each of the plurality of gas discharge members, and the through-holes may be formed in a direction perpendicular to the bottom of the flow groove.

Liquid and gas generated as the insulating layer is deformed by flames and high temperatures may move to the flow groove through the through-holes, and the liquid and the gas may move to both ends of the metal conductor in the longitudinal direction through the flow grooves.

The gas discharge member may be made of an insulative, heat-resistant material.

The plurality of gas discharge members may be spaced apart from each other by a predetermined distance, and an empty space may be formed between neighboring ones of the plurality of gas discharge members.

A first terminal and a second terminal may be coupled to both ends of the metal conductor, respectively.

The present invention provides a battery module in which an electrical connection is formed using the wire.

In addition, the present invention may provide various combinations of the above solving means.

### [Advantageous Effects]

Conventionally, when an insulating layer constituting a wire is ceramized, liquid and gas are discharged through cracks in the insulating layer, but in the present invention, a plurality of gas discharge members, each having a gas flow groove formed therein, is provided at an outer surface of a metal conductor, whereby it is possible to discharge the liquid and the gas in directions toward both ends of the wire.

In addition, even if an insulative tube is destroyed by fire, the metal conductor does not directly contact parts located in the vicinity of the wire since the insulative gas discharge members are added to the outer surface of the metal conductor, whereby it is possible to prevent short circuit due to contact between the wire and the parts located in the vicinity of the wire.

### [Description of Drawings]

FIG. 1 is a front view and a partial enlarged view of a conventional general wire.
FIG. 2 is a see-through view of a wire according to a first embodiment.
FIG. 3 is an enlarged perspective view showing the state in which a gas discharge member is added to an outer surface of a metal conductor in a part of the wire of FIG. 2.
FIG. 4 is a sectional view of the wire shown in FIG. 2.
FIG. 5 is an enlarged perspective view showing the state in which a gas discharge member is added to an outer surface of a metal conductor in a part of a wire according to a second embodiment.
FIG. 6 is a sectional view of the wire according to the second embodiment.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

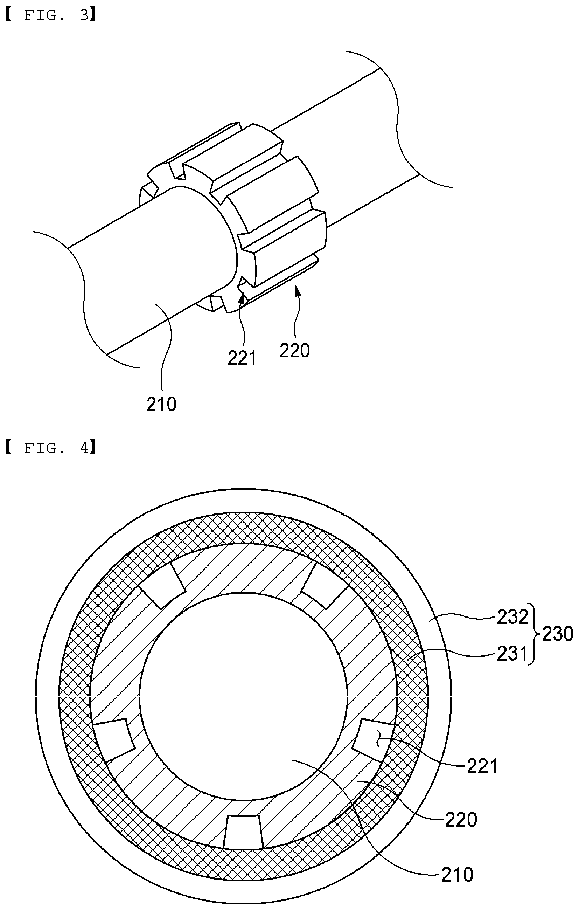

FIG. 2 is a see-through view of a wire according to a first embodiment, FIG. 3 is an enlarged perspective view showing the state in which a gas discharge member is added to an outer surface of a metal conductor in a part of the wire of FIG. 2, and FIG. 4 is a sectional view of the wire shown in FIG. 2.

Referring to FIGs. 2 to 4, the wire 200 according to the first embodiment includes a metal conductor 210 located at the inner center thereof, a plurality of gas discharge members 220 added to an outer surface of the metal conductor 210, the gas discharge members being disposed in a longitudinal direction L of the metal conductor 210, and a sheathing layer 230 configured to cover an outer surface of the metal conductor 210 to which the plurality of gas discharge members 220 is added.

The sheathing layer 230 includes an insulative tube 231 configured to cover the outer surface of the metal conductor 210 and a highly refractory covering layer 232 configured to cover the insulative tube 231.

The metal conductor 210 must be highly electrically conductive, and may be made of a material selected from the group consisting of copper, nickel, aluminum, and an alloy thereof.

The plurality of gas discharge members 220 is disposed at the outer surface of the metal conductor 210 so as to be spaced apart from each other at a predetermined distance. The distance between neighboring ones of the plurality of gas discharge members 220 may be configured to be constant in order to provide a constant degree of freedom of deformation at all positions of the wire. Alternatively, the distance between neighboring ones of the plurality of gas discharge members 220 may be irregular in consideration of the characteristics of the area where the wire is coupled.

The gas discharge member 220 is provided in the center thereof with a through-hole, and therefore the gas discharge member is formed in the shape of a ring configured such that the metal conductor is inserted through the through-hole.

The insulative tube 231 may be made of a material such as polyethylene or silicone. The highly refractory covering layer 232 may be configured such that a strip-shaped tape is added to an outer surface of the insulative tube 231 so as to be wound therearound, and the tape may be at least one selected from the group consisting of mica tape and glass tape. Specifically, the mica tape may be spirally wound around the outer surface of the insulative tube and then the glass tape may be spirally wound around an outer surface of the mica tape.

The gas discharge member 220 is provided with a flow groove 221 for discharging gas and liquid, which is formed parallel to a longitudinal direction L of the metal conductor 210.

When fire occurs in electronic components to which the wire 200 is coupled due to abnormal operation of the electronic components, the insulative tube constituting the wire 200 may be deformed by flames and high temperatures and may be ceramized or melted and deformed, at which time liquid and gas are generated. In the wire 200 according to the present invention, the gas discharge member 220 having the flow groove 221 formed therein is provided in the insulative tube 231, whereby liquid and gas generated in the wire 200 may move through the flow groove 221.

The flow grooves 221 are disposed so as to be spaced apart from each other by a predetermined distance throughout the entirety of the wire 200 in the longitudinal direction L of the metal conductor 210, and the liquid and the gas may be discharged to both ends of the wire 200 through the flow grooves 221.

At this time, the flow groove 221 formed in each of the plurality of gas discharge members 220 may be disposed so as to be aligned with the flow groove 221 formed in a gas discharge member 220 adjacent thereto in the longitudinal direction L such that the liquid and the gas can be quickly and safely discharged through the flow groove 221 formed in each of the plurality of gas discharge members 220.

The gas discharge member 220 may be made of an insulative, heat-resistant material, such as an inorganic material including silicon, carbon, and ceramic, or a high heat-resistant polymer resin.

Specifically, the high heat-resistant polymer resin is at least one selected from the group consisting of a phenolic resin, an epoxy resin, polyimide, polyphenylene sulfide, polysulfone, polyether sulfone, polyether imide, polyarylate, and polyetheretherketone.

Meanwhile, the gas discharge members 220 are disposed so as to be spaced apart from each other by a predetermined distance, and an empty space is formed between neighboring ones of the plurality of gas discharge members 220. Considering that the gas discharge members 220 may be formed in a less flexible shape due to the material properties of the gas discharge members 220, the gas discharge members 220 may be disposed so as to be spaced apart from each other such that the wire 200 can be bent in areas where the gas discharge members 220 are not present, whereby it is possible to provide a wire 200 that can be easily deformed.

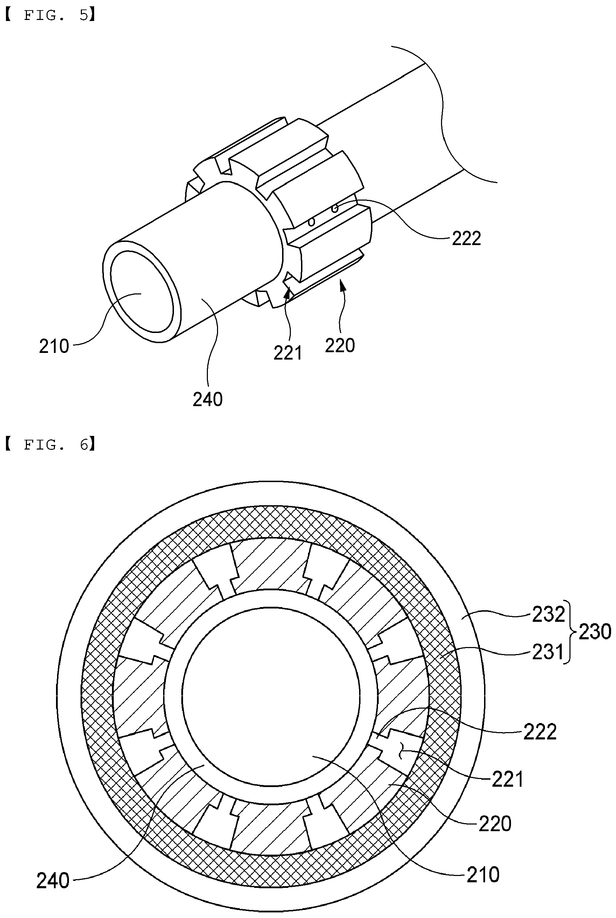

FIG. 5 is an enlarged perspective view showing the state in which a gas discharge member is added to an outer surface of a metal conductor in a part of a wire according to a second embodiment, and FIG. 6 is a sectional view of the wire according to the second embodiment.

Referring to FIGs. 5 and 6, the wire according to the second embodiment is different from the wire according to the first embodiment in that the wire according to the second embodiment further includes an insulating layer 240 configured to cover an outer surface of a metal conductor 210. In the wire according to the second embodiment, a plurality of gas discharge members 220 is added to an outer surface of the insulating layer 240 in the state in which the insulating layer 240 is further added to the entirety of outer surface of the metal conductor 210.

In the wire according to the second embodiment, the exposure of the metal conductor 210 may be further prevented as the result of the insulating layer 240 being included, whereby it is possible to secure higher insulation of the wire.

The insulating layer 240 may be made of the same material as the insulative tube 231, or may be made of a polymeric resin that is different from the insulative tube 231 and has higher insulation. For example, the insulating layer 240 may be made of a polymer resin such as polyethylene, polyvinyl chloride, natural rubber, polyester, an epoxy resin, a melamine resin, a phenolic resin, and polyurethane, a resin, mica, asbestos, ceramic, or fiberglass.

In the wire according to the second embodiment, each of the plurality of gas discharge members 220 has a flow groove 221 for discharging gas and liquid formed parallel to the longitudinal direction of the metal conductor 210. One through-hole 222 or two or more through-holes 222 are formed in each of the flow grooves 221 of the plurality of gas discharge members 220, and the through-hole 222 is formed in a direction perpendicular to the bottom of the flow groove 221 or in a direction orthogonal to the surface of the insulating layer 240.

When fire occurs in the electrical components to which the wire is electrically connected or when the wire is exposed to a high temperature environment, liquid and gas generated as the insulating layer 240 is melted and deformed by flames and high temperatures may move to the flow groove 221 through the through-hole 222, and the liquid and the gas may move to both ends of the metal conductor 210 in the longitudinal direction through the flow grooves 221.

In the wire according to the second embodiment, the through-hole 222 is provided in the flow groove 221 of the gas discharge member 220, whereby it is possible not only to guide the discharge of liquid and gas generated by deformation of the insulative tube located outside the gas discharge member 220 but also to guide liquid and gas generated by deformation of the insulating layer 240 located inside the gas discharge member 220 so as to move toward both ends of the wire.

Thus, it is possible to prevent the exposure of the metal conductor due to cracking of the covering layer as the gas is discharged from an unspecified part of the wire. In addition, the gas discharge member is made of an insulative fire-resistant material while having a predetermined thickness, whereby it is possible to prevent the metal conductor from contacting the conductive electrical component even if the insulating layer or the sheathing layer is damaged and the metal conductor is exposed.

The wire according to the present invention may be used to form electrical connection between a plurality of battery cells, wherein a first terminal and a second terminal are coupled to both ends of the metal conductor 210 so as to be electrically connected to a first battery cell and a second battery cell, respectively.

Each of the first terminal and the second terminal is not particularly limited in shape, and may be formed in a shape having a hole for screw engagement, a ring terminal shape, a shape having a weld zone, a clamp shape, and the like.

In addition, the first terminal and the second terminal may be coupled to electrical components constituting a battery module and/or a battery pack to form electrical connection.

In connection with the configuration, structure, and material of the battery module and the battery pack, known technology is applicable to the present invention, and therefore a description thereof will be omitted.

The present invention provides a battery module and a battery pack in which electrical connection is formed using the wire.

Those skilled in the art to which the present invention pertains will appreciate that various applications and modifications are possible within the category of the present invention based on the above description.

### (Description of Reference Symbols)

100, 200: Wires
110, 210: Metal conductors
120, 240: Insulating layers
130: Heat resistant layer
220: Gas discharge member
221: Flow groove
222: Through-hole
230: Sheathing layer
231: Insulative tube
232: Highly refractory covering layer
240: Insulating layer
L: Longitudinal direction

## Claims

1. A wire for electrical connection, the wire comprising:
a metal conductor located at an inner center thereof;
a plurality of gas discharge members added to an outer surface of the metal conductor, the gas discharge members being disposed in a longitudinal direction of the metal conductor;
an insulative tube configured to cover the outer surface of the metal conductor to which the plurality of gas discharge members are added; and
a highly refractory covering layer configured to cover the insulative tube.

2. The wire according to claim 1, wherein each of the plurality of gas discharge members is in the form of a ring that is fitted around the outer surface of the metal conductor.

3. The wire according to claim 1, wherein each of the plurality of gas discharge members comprises a flow groove configured to allow gas and liquid to be discharged therethrough, wherein the flow groove extends parallel to the longitudinal direction of the metal conductor.

4. The wire according to claim 3, wherein liquid and gas generated as the insulative tube is deformed by flames or high temperatures move to both ends of the metal conductor in the longitudinal direction through the flow grooves.

5. The wire according to claim 1, further comprising:
an insulating layer configured to cover the outer surface of the metal conductor, wherein
the plurality of gas discharge members are on an outer surface of the insulating layer.

6. The wire according to claim 5, wherein
each of the plurality of gas discharge members comprises a flow groove configured to allow gas and liquid to be discharged therethrough, the flow groove being formed parallel to the longitudinal direction of the metal conductor,
a plurality of through-holes is formed in the flow groove of each of the plurality of gas discharge members, and
the through-holes are formed in a direction perpendicular to a bottom of the flow groove.

7. The wire according to claim 6, wherein
liquid and gas generated as the insulating layer is deformed by flames and high temperatures move to the flow groove through the through-holes, and
the liquid and the gas move to both ends of the metal conductor in the longitudinal direction through the flow grooves.

8. The wire according to claim 1, wherein the gas discharge member is made of an insulative, heat-resistant material.

9. The wire according to claim 1, wherein
the plurality of gas discharge members are spaced apart from each other by a predetermined distance, and
an empty space is formed between neighboring ones of the plurality of gas discharge members.

10. The wire according to claim 1, wherein a first terminal and a second terminal are coupled to both ends of the metal conductor, respectively.

11. A battery module in which an electrical connection is formed using the wire according to any one of claims 1 to 10.
